# EUROPEAN PATENT APPLICATION

(11) **EP 4 844 910 A1**
(43) Date of publication of application: **25.11.2026**
(21) Application number: 25218590.5
(22) Date of filing: 26.11.2025
(51) Int. Cl.: H01M 50/204, H01M 50/209, H01M 50/244, H01M 50/264, H01M 50/503, H01M 50/507, H01M 50/251, H01M 50/593

(54) **BATTERY MODULE, ENERGY STORAGE DEVICE, AND POWER CONSUMPTION DEVICE**

(30) Priority: 20.05.2025 CN 202510654225
(71) Applicant: Zhejiang Jinko Energy Storage Co., Ltd., Jiaxing, Zhejiang (CN)
(72) Inventor: SHI, Yanyan, Haining (CN); LV, Yuanfu, Haining (CN); CHEN, Yuanhang, Haining (CN); ZHANG, Luhua, Haining (CN)
(74) Representative: Balder IP Law, S.L.

(57) **Abstract**

Disclosed is a battery module, an energy storage device, and a power consumption device. The battery module includes: a cell assembly including N rows of cells; a CCS assembly fixed on a top surface of the cell assembly, the CCS assembly including a plurality of series connection aluminum busbars, a first aluminum busbar, and a second aluminum busbar, the series connection aluminum busbars configured to connect adjacent cells in series; a first end plate fixed on one side of the cell assembly along a cell arrangement direction, and the first end plate being made of an insulating material; an anti-misalignment block embedded in the first anti-misalignment recess and engaged with the first aluminum busbar to fix the first end plate and the first aluminum busbar; and a second end plate fixed on another side of the cell assembly along the cell arrangement direction.

## Description

### TECHNICAL FIELD

The present disclosure relates to the field of energy storage, and particularly to a battery module, an energy storage device, and a power consumption device.

### BACKGROUND

Energy storage devices are equipment for electrical energy storage and transfer. The energy storage devices may be used in power systems, and can store surplus electrical energy during off-peak hours to supplement electricity consumption during peak hours. Therefore, the energy storage devices can both store excess power generation from power generation systems and deliver electrical energy to the grid when the power generation systems have low power generation.

An energy storage device typically includes a box and a plurality of battery cells disposed inside the box. The plurality of battery cells are connected in series, parallel, or a combination thereof to store electrical energy. Currently, volume energy density of energy storage devices is relatively low. Therefore, how to improve the volume energy density of energy storage devices is an urgent problem to be solved.

### SUMMARY

The embodiments of the present disclosure provide a battery module, an energy storage device, and a power consumption device, which can at least improve energy storage density of the battery module.

According to some embodiments of the present disclosure, a battery module is provided. The battery module includes a cell assembly, the cell assembly including at least one row of cells; a CCS (Cells Contact System) assembly fixed on a top surface of the cell assembly. The CCS assembly includes a plurality of series connection busbars, a first busbar, and a second busbar. The battery module further includes a first end plate fixed on a first side of the cell assembly in the cell arrangement direction. The first end plate has a first recess. The battery module further includes a first block embedded in the first recess and engaged with the first busbar to fix the first end plate and the first busbar. The battery module further includes a second end plate fixed on a second side of the cell assembly in the cell arrangement direction.

In some embodiments, the first busbar has a notch, and a portion of the first block protrudes from the first recess, and the portion protruding from the first recess engages with the notch.

In some embodiments, the first end plate and/or the second end plate further include a plurality of transverse reinforcement ribs and a plurality of longitudinal reinforcement ribs, the plurality of transverse reinforcement ribs and the plurality of longitudinal reinforcement ribs connected to each other.

In some embodiments, in an extension direction of the plurality of longitudinal reinforcement ribs, a distribution density of the plurality of transverse reinforcement ribs gradually increases from two sides toward a middle of the at least one of the first end plate and the second end plate.

In some embodiments, at least one of the first end plate and the second end plate further includes at least one module hoisting hole, the at least one module hoisting hole being cylindrical.

In some embodiments, a distribution density of the plurality of longitudinal reinforcement ribs connected to the at least one module hoisting hole is greater than a distribution density of the plurality of longitudinal reinforcement ribs on two sides of the at least one module hoisting hole.

In some embodiments, the first end plate further includes a plurality of first installation holes arranged at intervals, and a portion of the first busbar is embedded in a respective first installation hole of the plurality of first installation holes; and/or the second end plate further includes a plurality of second installation holes arranged at intervals, and a portion of the second busbar is embedded in a respective second installation hole of the second installation holes, where the first busbar is located on the first side of the cell assembly in the cell arrangement direction and the second busbar is located on the second side of the cell assembly in the cell arrangement direction.

In some embodiments, the first end plate further includes at least one fixed recess located at a top end of the first end plate, and the battery module further includes at least one wire harness fixing structure, the at least one wire harness fixing structure passing through the fixed recess and engaged with the first end plate.

In some embodiments, the first block includes a first main body portion and a second main body portion, the first main body portion and the second main body portion extending along different directions, and an extension direction of the first main body portion and an extension direction of the second main body portion being different from a direction from the first end plate toward the cell assembly.

In some embodiments, the first block further includes a limiting protrusion, the limiting protrusion located on a bottom surface of the second main body portion, and a thickness of the limiting protrusion gradually decreases in a direction toward the cell assembly.

In some embodiments, the battery module further includes at least one binding band, the binding band surrounding the cell assembly, the first end plate, and the second end plate to fix the cell assembly, the first end plate, and the second end plate.

In some embodiments, at least one of the first end plate and the second end plate further includes an upper binding band protrusion and a lower binding band stopper, the upper binding band protrusion and the lower binding band stopper forming an installation space, and the at least one binding band engaged in the installation space.

In some embodiments, a plurality of series connection busbars are configured to connect adjacent cells in a same row of the at least one row of cells in series.

According to some embodiments of the present disclosure, another aspect provides an energy storage device. The energy storage device includes: a housing, the housing having an accommodation space; and a plurality of the battery modules described above, the plurality of the battery modules located in the accommodation space.

According to some embodiments of the present disclosure, yet another aspect provides a power consumption device. The power consumption device includes the battery module described above, or includes the energy storage device described above.

### BRIEF DESCRIPTION OF THE DRAWINGS

One or more embodiments are illustrated by way of example in the accompanying drawings, which do not constitute limitations on the embodiments. The figures in the accompanying drawings are not necessarily to scale unless specifically stated. In order to more clearly illustrate the embodiments of the present disclosure or the technical solutions in the related art, the drawings used in the embodiments will be briefly introduced below. Obviously, the drawings in the following description are only some embodiments of the present disclosure, and for those of ordinary skill in the art, other drawings can be obtained based on these drawings without creative effort.
FIG. 1 is a partial structural schematic diagram of a battery module according to an embodiment of the present disclosure;
FIG. 2 is another partial structural schematic diagram of a battery module according to an embodiment of the present disclosure;
FIG. 3 is yet another partial structural schematic diagram of a battery module according to an embodiment of the present disclosure;
FIG. 4 is a structural schematic diagram of a CCS assembly according to an embodiment of the present disclosure;
FIG. 5 is a structural schematic diagram of a first end plate or a second end plate according to an embodiment of the present disclosure;
FIG. 6 is an enlarged structural schematic diagram of a wire harness fixing structure cooperating with a first end plate according to an embodiment of the present disclosure;
FIG. 7 is a structural schematic diagram of a first anti-misalignment recess according to an embodiment of the present disclosure;
FIG. 8 is a structural schematic diagram of an anti-misalignment block according to an embodiment of the present disclosure;
FIG. 9 is an assembly schematic diagram of the first anti-misalignment recess and the anti-misalignment block according to an embodiment of the present disclosure.
FIG. 10 is another assembly schematic diagram of the first anti-misalignment recess and the anti-misalignment block according to an embodiment of the present disclosure.
FIG. 11 is a structural schematic diagram of a power consumption device according to an embodiment of the present disclosure.

### DETAILED DESCRIPTION OF THE EMBODIMENTS

As known from the background, conventional battery modules typically include: a cell assembly, a cell insulation sheet, and end plates. To enable the end plates to have certain support strength, the end plates are usually made of metal, and the end plates can conduct electricity. The cell insulation sheet is disposed between the end plates and the cell assembly, and insulates the end plates and the cell assembly from each other to avoid abnormal electrical conduction. However, providing the insulation sheet makes assembly of the battery module cumbersome and increases cost.

The technical solutions provided by embodiments of the present disclosure have at least the following advantages. On one hand, setting the first end plate and the second end plate as insulating materials can reduce the provision of insulation sheets in the battery module, thereby improving energy storage density of the battery module, and improving space utilization of the battery module while serving the function of the end plates. On the other hand, providing the anti-misalignment block and the first anti-misalignment recess at a position corresponding to the first aluminum busbar can avoid misalignment during installation of the first aluminum busbar and the second aluminum busbar, providing anti-misalignment, and improving reliability of battery module installation.

In the description of the embodiments of the present disclosure, technical terms "first," "second," etc. are only used to distinguish different objects and should not be understood as indicating or implying relative importance or implicitly specifying the number, specific order, or primary-secondary relationship of the indicated technical features. In the description of the embodiments of the present disclosure, "a plurality of" means two or more, unless otherwise specifically defined.

The "embodiment" mentioned in the present disclosure means that a specific feature, structure, or characteristic described in connection with the embodiment may be included in at least one embodiment of the present disclosure. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of the present disclosure, the term "and/or" is only an associative relationship describing associated objects, indicating that three relationships may exist. For example, A and/or B may indicate: existence of A alone, simultaneous existence of A and B, and existence of B alone. In addition, the character "/" in this document generally indicates that the associated objects are in an "or" relationship.

In the description of the embodiments of the present disclosure, the term "a plurality of" means two or more (including two). Similarly, "a plurality of groups" means two or more groups (including two groups), and "a plurality of pieces" means two or more pieces (including two pieces).

In the description of the embodiments of the present disclosure, technical terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," etc. indicate orientations or positional relationships based on the orientations or positional relationships shown in the drawings, are only for convenience of describing the embodiments of the present disclosure and simplifying the description, and do not indicate or imply that the referred device or element must have a specific orientation, be constructed and operated in a specific orientation, and therefore cannot be understood as limitations on the embodiments of the present disclosure.

In the description of the embodiments of the present disclosure, unless otherwise expressly specified and limited, the technical terms "mount", "connect", "couple", "fix", etc. should be understood in a broad sense, for example, it may be a fixed connection, a detachable connection, or integrated; it may be a mechanical connection, an electrical connection; it may be a direct connection, an indirect connection through an intermediate medium, or an internal connection between two elements or an interaction relationship between two elements. For those of ordinary skill in the art, the specific meanings of the above terms in the embodiments of the present disclosure can be understood according to specific situations.

In the drawings corresponding to the embodiments of the present disclosure, for better understanding and description, the thicknesses and areas of layers are enlarged. When describing that a component (such as a layer, film, region, or substrate) is on or above the surface of another component, the component may be "directly" on the surface of the other component, or there may be a third component between the two components. On the contrary, when describing that a component is on the surface of another component or that another component is formed or disposed on the surface of a component, it means that there is no third component between the two components. In addition, when describing that a component is "substantially" formed on another component, it means that the component is not formed on the entire surface (or front surface) of the other component, nor is it formed on part of the edge of the entire surface.

In the description of the embodiments of the present disclosure, when a component is described as "comprising" or "including" another component, it does not exclude the presence of other components unless otherwise specified and defined, and other components may also be included. In addition, when a first component such as a layer, film, region, or plate is described as being "on/located on" a second component, it may be "directly on" the second component (i.e., on the surface of the second component without any other component between the first component and the second component), or there may be another component between them. Furthermore, when a first component such as a layer, film, region, or plate is "directly located on" a second component, or when a component such as a layer, film, region, or plate is located on the surface of the second component, it means that no other component is located between the first component and the second component.

The terms used in the description of the various described embodiments herein are for the purpose of describing specific embodiments only and are not intended to be limiting. As used in the description of the various embodiments and the appended claims, "the component" is intended to include the plural form as well, unless the context clearly indicates otherwise. The component includes layers, films, regions, plates, and other components.

The embodiments of the present disclosure will be described in detail below with reference to the drawings. However, those of ordinary skill in the art should understand that many technical details are proposed in the embodiments of the present disclosure to enable the reader to better understand the present disclosure. However, even without these technical details and various changes and modifications based on the following embodiments, the technical solution claimed in the present disclosure can be implemented.

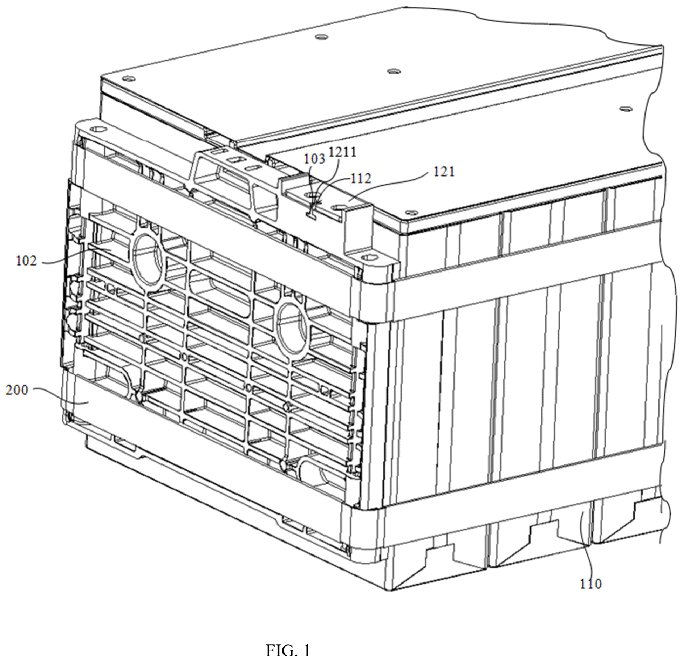

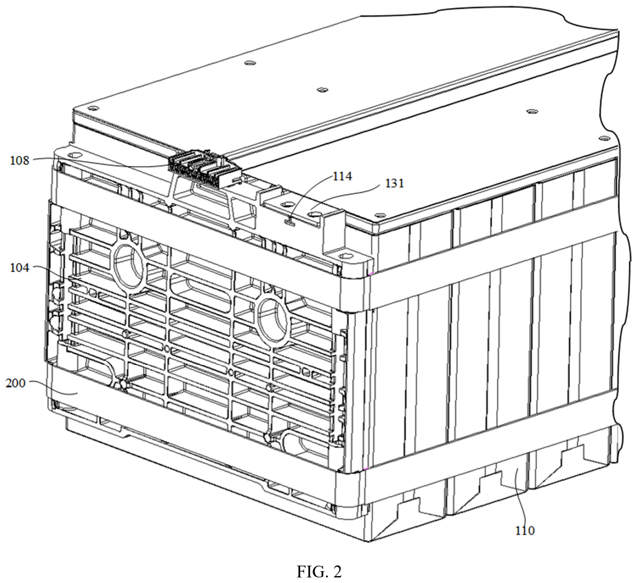

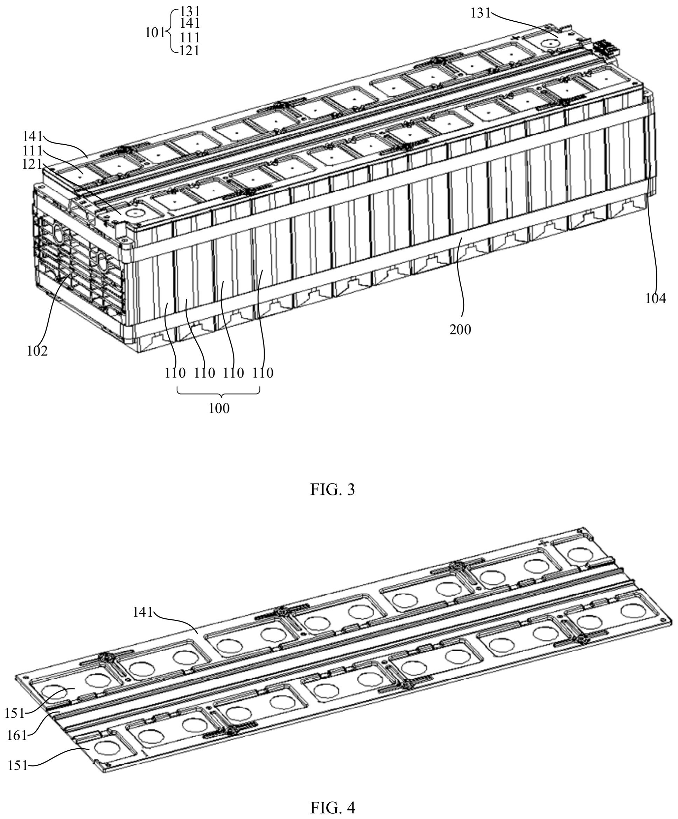

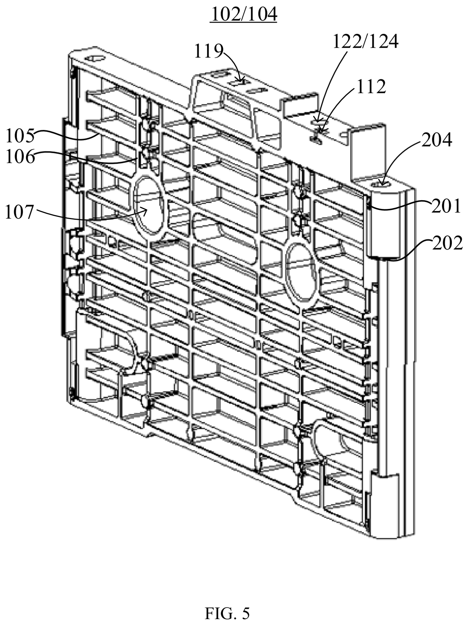

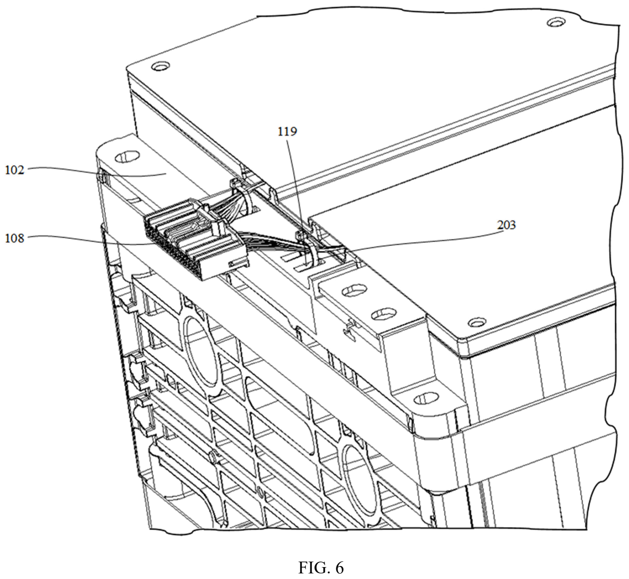

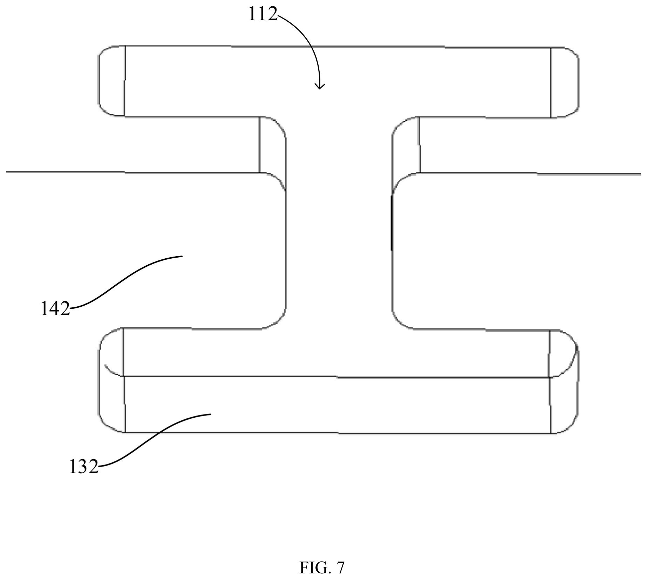

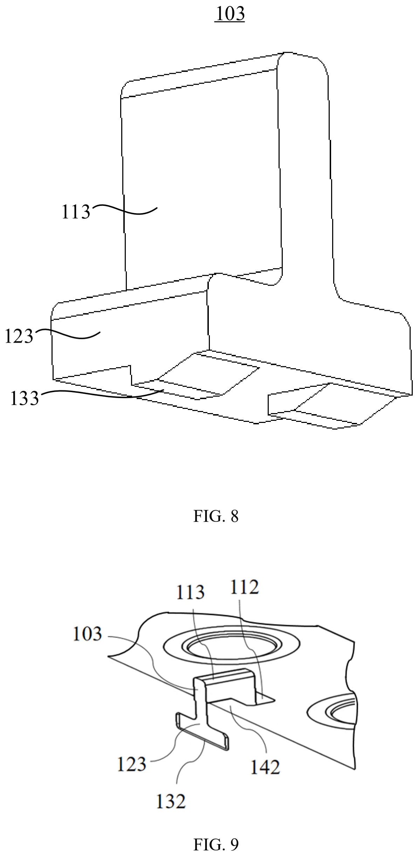

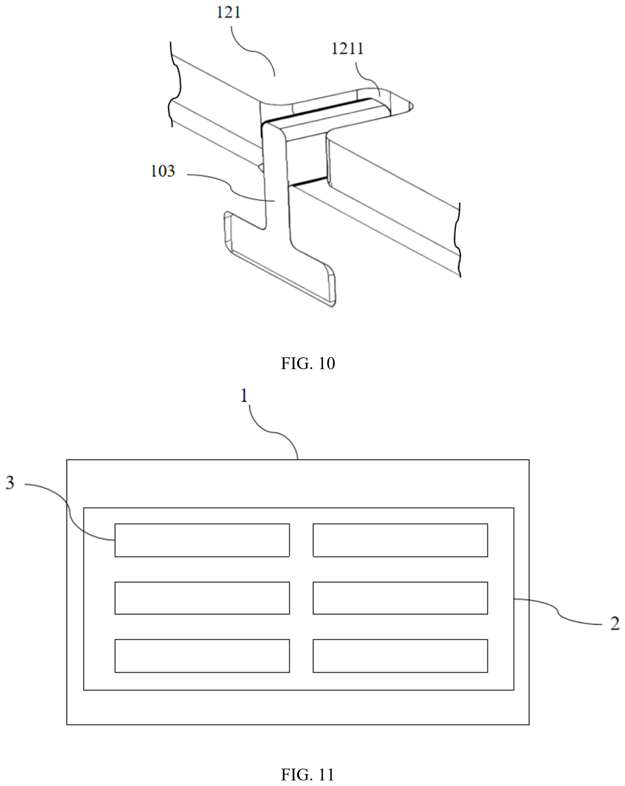

Referring to FIG. 1 to FIG. 10, FIG. 1 is a partial structural schematic diagram of a battery module according to an embodiment of the present disclosure. FIG. 2 is another partial structural schematic diagram of a battery module according to an embodiment of the present disclosure. FIG. 3 is yet another partial structural schematic diagram of a battery module according to an embodiment of the present disclosure. FIG. 4 is a structural schematic diagram of a CCS assembly according to an embodiment of the present disclosure. FIG. 5 is a structural schematic diagram of a first end plate or a second end plate according to an embodiment of the present disclosure. FIG. 6 is an enlarged structural schematic diagram of a wire harness fixing structure cooperating with a first end plate according to an embodiment of the present disclosure. FIG. 7 is a structural schematic diagram of a first anti-misalignment recess according to an embodiment of the present disclosure. FIG. 8 is a structural schematic diagram of an anti-misalignment block according to an embodiment of the present disclosure. FIG. 9 is an assembly schematic diagram of the first anti-misalignment recess and the anti-misalignment block according to an embodiment of the present disclosure. FIG. 10 is another assembly schematic diagram of the first anti-misalignment recess and the anti-misalignment block according to an embodiment of the present disclosure. Among them, FIG. 1 shows a structural schematic diagram including the first end plate, and FIG. 2 shows a structural schematic diagram including the second end plate.

Referring to FIG. 1, FIG. 2, FIG. 3, and FIG. 4, in some embodiments, the battery module may include a cell assembly 100, the cell assembly 100 including N rows of cells 110.

The battery module may include a CCS assembly 101. The CCS assembly 101 is fixed on a top surface of the cell assembly 100. The CCS assembly 101 includes a plurality of series connection aluminum busbars 111, a first aluminum busbar 121, and a second aluminum busbar 131. The series connection aluminum busbars 111 are configured to connect adjacent cells 110 in series. The first aluminum busbar 121 is located on one side of the cell assembly 100 along an arrangement direction (i.e., a cell arrangement direction) of the cells 110. The second aluminum busbar 131 is located on another side of the cell assembly 100 along the arrangement direction of the cells 110.

The battery module may include a first end plate 102. The first end plate 102 is fixed on the one side of the cell assembly 100 along the arrangement direction of the cells 110. The first end plate 102 has a first anti-misalignment recess 112. The first anti-misalignment recess 112 matches with the first aluminum busbar 121. The first end plate 102 is made of an insulating material.

The battery module may include an anti-misalignment block 103. The anti-misalignment block 103 is embedded in the first anti-misalignment recess 112 and engaged with the first aluminum busbar 121 to fix the first end plate 102 and the first aluminum busbar 121.

The battery module may include a second end plate 104. The second end plate 104 is fixed on the another side of the cell assembly 100 along the arrangement direction of the cells 110. The second end plate 104 has a second anti-misalignment recess 114. The second anti-misalignment recess 114 matches with the second aluminum busbar 131. The second end plate 104 is made of an insulating material.

The technical solutions provided by embodiments of the present disclosure have at least the following advantages. On one hand, setting the first end plate 102 and the second end plate 104 as insulating materials can reduce the provision of insulation sheets in the battery module, thereby improving energy storage density of the battery module, and improving space utilization of the battery module while serving the function of the end plates. On the other hand, providing the anti-misalignment block 103 and the first anti-misalignment recess 112 at a position corresponding to the first aluminum busbar 121 can avoid misalignment during installation of the first aluminum busbar 121 and the second aluminum busbar 131, providing anti-misalignment, and improving reliability of battery module installation.

The number of cells 110 in the cell assembly 100 can be selected according to the required output power of the battery module. The higher the required output power of the battery module, the greater the number of cells 110 may be.

In some embodiments, the cell 110 has a pressure relief valve. When the temperature of the cell 110 exceeds a normal value, its internal pressure increases rapidly. Under such condition, the cell 110 releases the internal pressure to the outside through the pressure relief valve to reduce the possibility of explosion of the cell 110.

In some embodiments, the CCS assembly 101 may further include an isolation plate 141. The isolation plate 141 in the CCS assembly 101 is a structure that isolates the cell 110 from other structures. A plurality of recesses 151 provided in the isolation plate 141 are used to install the series connection aluminum busbars 111, the first aluminum busbar 121, and the second aluminum busbar 131. The remaining part of the isolation plate 141 covers the top surface of the cell 110 not covered by the series connection aluminum busbars 111, thereby avoiding accidental connection between the cell 110 and other structures and avoiding safety hazards such as short circuits.

For the series connection aluminum busbars 111, the first aluminum busbar 121, and the second aluminum busbar 131, the recesses 151 provide installation space and serve to provide positioning, thereby improving the assembly efficiency of the series connection aluminum busbars 111, the first aluminum busbar 121, and the second aluminum busbar 131 with the isolation plate 141. In addition, the recesses 151 also serves to limit the positions, so as to improve the stability of the series connection aluminum busbars 111, the first aluminum busbar 121, and the second aluminum busbar 131 installed on the isolation plate 141, thereby improving the stability of the connection between the series connection aluminum busbars 111, the first aluminum busbar 121, and the second aluminum busbar 131 and the cells 110 and sampling connection lines.

The recesses 151 may be recessed toward a side close to the cell assembly 100 along a thickness direction of the cell 110. The specific shape of the recesses 151 is not limited and may have various shapes, such as an arc-shaped groove, a rectangular groove, an elliptical groove with a notch, etc. In some embodiments, the recesses 151 are arc-shaped grooves (the arc-shaped groove should be understood in a broad sense, including circular arc grooves, elliptical arc grooves, etc.). Arc-shaped grooves are easy to vacuum form and demold.

For the cell 110, the cell 110 includes two output ports. The series connection aluminum busbars 111 are configured to connect one output port of each of two adjacent cells 110 to connect the two adjacent cells 110 in series. The first aluminum busbar 121 and the second aluminum busbar 131 are respectively connected to one output port of one cell 110, serving as positive output and negative output.

The series connection aluminum busbars 111, the first aluminum busbar 121, and the second aluminum busbar 131 may be directly welded to the cells 110. The first aluminum busbar 121 may be one of a positive aluminum busbar or a negative aluminum busbar, and the second aluminum busbar 131 may be the other of the positive aluminum busbar or the negative aluminum busbar.

Further, taking the cell assembly 100 with three cells 110 as an example, the cell assembly 100 includes a first cell, a second cell, and a third cell, each cell 110 including a positive terminal and a negative terminal. One series connection aluminum busbar 111 connects the positive terminal of the first cell and the negative terminal of the second cell, and another series connection aluminum busbar 111 connects the positive terminal of the second cell and the negative terminal of the third cell. The negative terminal of the first cell is electrically connected to the second aluminum busbar 131, and the positive terminal of the third cell is electrically connected to the first aluminum busbar 121, serving as positive output and negative output, respectively. It should be understood that when the cell assembly 100 has other numbers of cells 110, the connection sequence can be deduced according to the above logic.

In some embodiments, the CCS assembly 101 may further include sampling connection lines. The sampling connection lines may monitor the voltage and temperature of each cell 110 in the cell assembly 100 and transmit the collected signals to a battery management system (not shown) to achieve overcurrent protection and thermal runaway management of the cell assembly 100. The CCS assembly 101 may be fixedly connected to the cell assembly 100. The number of CCS assemblies 101 may correspond to the number of cell assemblies 100.

The sampling connection lines may be welded to the series connection aluminum busbars 111, the first aluminum busbar 121, or the second aluminum busbar 131 to achieve electrical connection with the series connection aluminum busbars 111, the first aluminum busbar 121, and the second aluminum busbar 131, thereby facilitating the collection of various data of the cells 110. The sampling connection lines may be copper wires, aluminum alloy wires, flexible printed circuits (FPC), or printed circuit boards (PCB).

In some embodiments, the isolation plate 141 is further provided with isolation grooves 161. The sampling connection lines are fixed in the isolation grooves 161, thereby reducing the possibility of the sampling connection lines sliding, shifting, or even falling off from the CCS assembly 101, ensuring the stability of the connection of the sampling connection lines, and thereby improving the reliability of the CCS assembly 101. Using the isolation grooves 161 to provide routing space for the sampling connection lines of the same battery module can improve space utilization within the battery module.

Referring to FIG. 1 and FIG. 5, in some embodiments, the material of the first end plate 102 is a polymer nano-plastic material, such as nano-polyolefin, nano-nylon, nano-polyester, nano-polyoxymethylene, etc. The polymer nano-plastic material has high strength. After forming the first end plate 102, the first end plate 102 has strong stress resistance, thereby providing certain stress resistance while achieving insulation.

In some embodiments, the first end plate 102 may further include a plurality of transverse reinforcement ribs 105 and a plurality of longitudinal reinforcement ribs 106. The plurality of transverse reinforcement ribs 105 and the plurality of longitudinal reinforcement ribs 106 are connected to each other. Using the transverse reinforcement ribs 105 and the longitudinal reinforcement ribs 106 can further improve the support strength of the first end plate 102. The first end plate 102 can be used to prevent the cell assembly 100 from shifting during vibration, impact, or long-term use, improving the stability of the battery module.

In some embodiments, in the extension direction of the longitudinal reinforcement ribs 106, the distribution density of the transverse reinforcement ribs 105 gradually increases from two sides toward a middle of the first end plate 102. In other words, the distribution density of the transverse reinforcement rib 105 at the middle of the first end plate 102 is greater. A greater distribution density of the transverse reinforcement ribs 105 further improves the stress resistance at the middle of the first end plate 102. For the first end plate 102, the middle of the first end plate 102 often bears greater stress. Therefore, by increasing the distribution density of the transverse reinforcement ribs 105 at the middle of the first end plate 102, the reliability of the battery module can be further improved.

In some embodiments, the first end plate 102 further includes at least one module hoisting hole 107, the at least one module hoisting hole 107 being cylindrical. The at least one module hoisting hole 107 is used to facilitate the installation of the battery module. By reserving the at least one module hoisting hole 107 in advance, the installation of the battery module is facilitated, thereby improving the convenience of battery module installation.

In other embodiments, the module hoisting hole 107 may have other shapes, as long as the shape facilitates interaction with hoisting machinery.

In some embodiments, the distribution density of the longitudinal reinforcement ribs 106 connected to the module hoisting hole 107 is greater than the distribution density of the longitudinal reinforcement ribs 106 on two sides of the module hoisting hole 107. In other words, the distribution density of the longitudinal reinforcement ribs 106 around the module hoisting hole 107 is greater. When using the module hoisting hole 107, the stress around the module hoisting hole 107 is strong. By setting a greater distribution density of the longitudinal reinforcement ribs 106 around the module hoisting hole 107, the stress resistance during the use of the module hoisting hole 107 can be improved, thereby avoiding deformation of the module hoisting hole 107 and further improving the reliability of the module hoisting hole 107 and the first end plate 102.

In some embodiments, the first end plate 102 further includes first installation holes 122 arranged at intervals. A portion of the first aluminum busbar 121 is embedded in the first installation hole 122. For the first aluminum busbar 121, a protrusion corresponding to a respective first installation hole 122 of the first installation holes 122 may be provided, and this protrusion is installed in the respective first installation hole 122. Through the engagement of the protrusion and the recess, the positioning and installation of the first aluminum busbar 121 are facilitated, thereby improving the convenience of battery module assembly.

Referring to FIG. 2 and FIG. 6, in some embodiments, the battery module may further include an output connector 108. The output connector 108 is electrically connected to the sampling connection lines, collecting electrical signals of the cells 110 obtained by all sampling connection lines, and outputting the signals via the output connector 108.

Continuing to refer to FIG. 1, FIG. 4, FIG. 5, and FIG. 6, FIG. 6 is an enlarged structural schematic diagram of a wire harness fixing structure cooperating with a first end plate according to an embodiment of the present disclosure. In some embodiments, the first end plate 102 further includes at least one fixed recess 119, the at least one fixed recess 119 located at a top end of the first end plate 102. The battery module further includes at least one wire harness fixing structure 203, the at least one wire harness fixing structure 203 passing through a respective fixed recess 119 and engaged with the first end plate 102. Through the interaction of the wire harness fixing structure 203 and the fixed recess 119, the wire harness fixing structure can be fixed on the first end plate 102. The wire harness fixing structure 203 can limit the sampling connection lines, thereby facilitating the routing of the sampling connection lines and improving the aesthetics of the battery module.

In some embodiments, the sampling connection lines may be fixed to the first end plate 102 with a cable tie. In other embodiments, at least one wire binding structure may be provided in the CCS assembly 101. The at least one wire binding structure and the isolation grooves 161 form at least one first accommodation space, and each first accommodation space fixes one sampling connection line.

Compared with the method of fixing with a cable tie, the method of using the wire binding structure can avoid the cable tie from interfering with the cells 110 when fixing the sampling connection lines, thereby avoiding scratching the blue film on the surface of the cells 110, thus improving the reliability of the battery module, helping to extend the service life of the cells 110, and improving the reliability of the battery module. The method of setting the wire binding structure also helps save space in the CCS assembly 101 and facilitates the arrangement of the CCS assembly 101 and the cell assembly 100 in the battery pack.

In some embodiments, the first aluminum busbar 121 has a notch 1211 as shown in FIG. 10, and a portion of the anti-misalignment block 103 protrudes from the first anti-misalignment recess 112, and the portion protruding from the first anti-misalignment recess 112 engages with the notch. The anti-misalignment block 103 is configured to protrude from the first anti-misalignment recess 112, so that when the first aluminum busbar 121 and the second aluminum busbar 131 are installed misaligned, the second aluminum busbar 131 cannot engage correctly with the anti-misalignment block 103, thereby avoiding misinstallation of the first aluminum busbar 121 and the second aluminum busbar 131 and improving the reliability of the battery module.

In some embodiments, the first end plate 102 further includes module fixing holes 204, the module fixing holes 204 located on two sides of the first end plate 102 along a direction perpendicular to the cell arrangement direction. In other words, the module fixing holes 204 are located on two sides of the first end plate 102 and are arranged in a vertical direction, respectively. Reserving the module fixing holes 204 on the first end plate 102 can facilitate the assembly of the first end plate 102 and improve the convenience and reliability of the installation of the first end plate 102.

Referring to FIG. 1, FIG. 2, and FIG. 5, in some embodiments, the battery module further includes at least one binding band 200, the binding band 200 surrounding the cell assembly 100, the first end plate 102, and the second end plate 104 to fix the cell assembly 100, the first end plate 102, and the second end plate 104. Using the binding band 200 can fix the cell assembly, the first end plate 102, and the second end plate 104 together, thereby avoiding mutual movement between battery modules and reducing the overall size of the battery module, thus improving space utilization of the battery module.

In some embodiments, the battery module further includes at least one buffer pad (not shown). The at least one buffer pad is located between the first end plate 102 and the cell assembly 100, and is located between the second end plate 104 and the cell assembly 100, and the at least one buffer pad is opposite to the binding band 200. By having the buffer pad face the binding band 200, during the installation of the battery module, the buffer pad can buffer the stress on the battery module, thereby reducing the stress on the cell assembly 100 during the fixation of the battery module and improving the reliability of the battery module.

Here, "opposite to" means that the orthographic projection of the binding band 200 on the surface of the buffer pad is located within the buffer pad. For the binding band 200, during the fixation of the cell assembly 100, stress may be applied to the cells 110. Using the buffer pad can improve the reliability of the battery module.

In some embodiments, the number of binding bands 200 is plural. A plurality of buffer pads may be provided corresponding to the binding bands 200 to further improve the reliability of the battery module.

In some embodiments, the first end plate 102 further includes an upper binding band protrusion 201 and a lower binding band stopper 202. The upper binding band protrusion 201 and the lower binding band stopper 202 form an installation space, and the binding band 200 is engaged in the installation space. The upper binding band protrusion 201 is configured to limit the upper movement of the binding band 200, and the lower binding band stopper 202 is configured to limit the lower movement of the binding band 200, thereby facilitating the engagement of the binding band 200 on the first end plate 102 and improving the convenience of battery module installation.

The upper binding band protrusion 201 and the lower binding band stopper 202 are actually protrusions and platforms protruding from the first end plate 102, and the binding band is engaged through upper and lower blocking.

Referring to FIG. 1, FIG. 7 to FIG.10, in some embodiments, the first anti-misalignment recess 112 may include a first limiting barrier 132. The first limiting barrier 132 is configured to limit the movement of the anti-misalignment block 103 in a direction toward and away from the cell assembly 100. The first anti-misalignment recess 112 may further include a second limiting barrier 142, the second limiting barrier 142 is configured to limit the movement of the anti-misalignment block 103 in a direction perpendicular to the direction toward and away from the cell assembly 100.

Using the interaction of the first limiting barrier 132 and the second limiting barrier 142, on one hand, the installation of the anti-misalignment block 103 is facilitated, thereby avoiding the problem of improper installation of the anti-misalignment block 103. On the other hand, after the anti-misalignment block 103 is installed, the movement of the anti-misalignment block 103 within the first anti-misalignment recess 112 is prevented, thereby avoiding the problem that the anti-misalignment block 103 cannot correctly determine the installation of the first aluminum busbar 121 and the second aluminum busbar 131, thus further improving the reliability of the battery module. Moreover, the second limiting barrier 142 is located above the first limiting barrier 132, and the interaction between the second limiting barrier 142 and the first limiting barrier 132 can also limit the movement of the anti-misalignment block 103 in the vertical direction.

In some embodiments, the anti-misalignment block 103 may include a first main body portion 113 and a second main body portion 123. The first main body portion 113 and the second main body portion 123 extend along different directions, and the extension direction of the first main body portion 113 and the extension direction of the second main body portion 123 being different from a direction from the first end plate 102 toward the cell assembly 100, and the first main body portion 113 is located above the second main body portion 123.

The anti-misalignment block 103 may further include a limiting protrusion 133. The limiting protrusion 133 is located on a bottom surface of the second main body portion 123. The limiting protrusion 133 is configured to cooperate with the first limiting barrier 132 after the anti-misalignment block 103 is installed to limit the movement of the anti-misalignment block 103 in the direction toward and away from the cell assembly 100.

In some embodiments, the thickness of the limiting protrusion 133 gradually decreases in a direction toward the cell assembly 100. When installing the anti-misalignment block 103, the side of the limiting protrusion 133 with a thinner thickness can be oriented toward the cell assembly 100, facilitating the installation of the anti-misalignment block 103.

The interaction between the anti-misalignment block 103 and the first anti-misalignment recess 112 is further explained below. Referring to FIG. 7 to FIG. 10, the width of the first main body portion 113 is less than or equal to the gap between the second limiting barriers 142, thereby avoiding interference between the second limiting barriers 142 and the first main body portion 113. The thickness of the second main body portion 123 is less than or equal to the gap between the first limiting barrier 132 and the second limiting barrier 142, thereby avoiding interference between the first limiting barrier 132 and the second limiting barrier 142 and the second main body portion 123. As the anti-misalignment block 103 is installed, the limiting protrusion 133 is located within the first anti-misalignment recess 112, thus completing the installation of the anti-misalignment block 103.

After installation, due to the limitations of the limiting protrusion 133, the second main body portion 123, the first limiting barrier 132, and the second limiting barrier 142, the anti-misalignment block 103 may not fall out of the first anti-misalignment recess 112. This is because the limiting protrusion 133 is located within the first anti-misalignment recess 112. When trying to remove the anti-misalignment block 103 along the installation direction, the limiting protrusion 133 interferes with the first limiting barrier 132. If it is necessary to remove the anti-misalignment block 103, this interference must be eliminated. To eliminate this interference, the anti-misalignment block 103 needs to be moved in the vertical direction. However, due to the limitations of the second main body portion 123, the first limiting barrier 132, and the second limiting barrier 142, when moving the anti-misalignment block 103 in the vertical direction, the second main body portion 123 may interfere with the first limiting barrier 132 and the second limiting barrier 142. Therefore, the anti-misalignment block 103 cannot fall out of the first anti-misalignment recess 112.

In some embodiments, in the direction from the first end plate 102 toward the cell assembly 100, the length of the first anti-misalignment recess 112 is equal to the length of the second main body portion 123, so that after the anti-misalignment block 103 is installed, the movement of the anti-misalignment block 103 in the direction toward and away from the cell assembly 100 can be limited.

Referring to FIG. 2 and FIG. 5, in some embodiments, the material of the second end plate 104 is a polymer nano-plastic material, such as nano-polyolefin, nano-nylon, nano-polyester, nano-polyoxymethylene, etc. The polymer nano-plastic material has high strength. After forming the second end plate 104, the second end plate 104 has strong stress resistance, thereby providing certain stress resistance while achieving insulation.

In some embodiments, the second end plate 104 may further include a plurality of transverse reinforcement ribs 105 and a plurality of longitudinal reinforcement ribs 106, the plurality of transverse reinforcement ribs 105 and the plurality of longitudinal reinforcement ribs 106 connected to each other. Using the transverse reinforcement ribs 105 and the longitudinal reinforcement ribs 106 can further improve the support strength of the second end plate 104. The second end plate 104 can be used to prevent the cell assembly 100 from shifting during vibration, impact, or long-term use, improving the stability of the battery module.

In some embodiments, in the extension direction of the longitudinal reinforcement ribs 106, the distribution density of the transverse reinforcement ribs 105 gradually increases from two sides toward a middle of the second end plate 104. In other words, the distribution density of the transverse reinforcement ribs 105 at the middle of the second end plate 104 is greater. A greater distribution density of the transverse reinforcement ribs 105 further improves the stress resistance at the middle of the second end plate 104. For the second end plate 104, the middle of the second end plate 104 often bears greater stress. Therefore, by increasing the distribution density of the transverse reinforcement ribs 105 at the middle of the second end plate 104, the reliability of the battery module can be further improved.

In some embodiments, the second end plate 104 further includes at least one module hoisting hole 107, the at least one module hoisting hole 107 being cylindrical. The at least one module hoisting hole 107 is used to facilitate the installation of the battery module. By reserving the module hoisting hole 107 in advance, the installation of the battery module is facilitated, thereby improving the convenience of battery module installation.

In some embodiments, the distribution density of the longitudinal reinforcement ribs 106 connected to the module hoisting hole 107 is greater than the distribution density of the longitudinal reinforcement ribs 106 on two sides of the module hoisting hole 107. In other words, the distribution density of the longitudinal reinforcement rib 106 around the module hoisting hole 107 is greater. When using the module hoisting hole 107, the stress around the module hoisting hole 107 is strong. By setting a greater distribution density of the longitudinal reinforcement ribs 106 around the module hoisting hole 107, the stress resistance during the use of the module hoisting hole 107 can be improved, thereby avoiding deformation of the module hoisting hole 107 and further improving the reliability of the module hoisting hole 107 and the second end plate 104.

In some embodiments, the second end plate 104 further includes second installation holes 124 arranged at intervals, and a portion of the second aluminum busbar 131 is embedded in a respective second installation hole 124 of the second installation holes 124. For the second aluminum busbar 131, a protrusion corresponding to the respective second installation hole 124 may be provided, and this protrusion is installed in the respective second installation hole 124. Through the engagement of the protrusion and the recess, the positioning and installation of the second aluminum busbar 131 are facilitated, thereby improving the convenience of battery module assembly.

In some embodiments, the second end plate 104 may further include at least one fixed recess 119. The at least one fixed recess 119 is similarly located at a top end of the second end plate 104.

In some embodiments, the second end plate 104 may be provided with a second anti-misalignment recess 114. The second aluminum busbar 131 has no notch. Even if the second aluminum busbar 131 and the first aluminum busbar 121 are installed misaligned, the absence of a notch on the second aluminum busbar 131 can prevent the second aluminum busbar 131 from being installed, so that when the first aluminum busbar 121 and the second aluminum busbar 131 are installed misaligned, the second aluminum busbar 131 cannot correspondingly engage with the anti-misalignment block 103, thereby avoiding misinstallation of the first aluminum busbar 121 and the second aluminum busbar 131 and improving the reliability of the battery module.

In some embodiments, the second end plate 104 further includes module fixing holes 204. The module fixing holes 204 located on two sides of the second end plate 104 along a direction perpendicular to the cell arrangement direction. In other words, the module fixing holes 204 are located on two sides of the second end plate 104 and are arranged in a vertical direction. Reserving the module fixing holes 204 on the second end plate 104 can facilitate the assembly of the second end plate 104 and improve the convenience and reliability of the installation of the second end plate 104.

In some embodiments, the second end plate 104 further includes an upper binding band protrusion 201 and a lower binding band stopper 202. The upper binding band protrusion 201 and the lower binding band stopper 202 form an installation space, and the binding band 200 is engaged in the installation space. The upper binding band protrusion 201 is configured to limit the upper movement of the binding band 200, and the lower binding band stopper 202 is configured to limit the lower movement of the binding band 200, thereby facilitating the engagement of the binding band 200 on the second end plate 104 and improving the convenience of battery module installation.

In some embodiments, the structures of the first end plate 102 and the second end plate 104 may be the same, thereby facilitating the production of the first end plate 102 and the second end plate 104 and improving the versatility of the entire battery module.

The technical solutions provided by embodiments of the present disclosure have at least the following advantages. On one hand, setting the first end plate 102 and the second end plate 104 as insulating materials can reduce the provision of insulation sheets in the battery module, thereby improving energy storage density of the battery module, and improving space utilization of the battery module while serving the function of the end plates. On the other hand, providing the anti-misalignment block 103 and the first anti-misalignment recess 112 at a position corresponding to the first aluminum busbar 121 can avoid misalignment during installation of the first aluminum busbar 121 and the second aluminum busbar 131, providing anti-misalignment, and improving reliability of battery module installation.

In some embodiments of the present disclosure, an energy storage device is further provided. The energy storage device may include the battery modules in some or all of the above embodiments. It should be noted that the same or corresponding parts as those in the above embodiments can refer to the above embodiments, and will not be repeated below.

In some embodiments, the energy storage device may include a housing, the housing having an accommodation space.

The energy storage device may further include a plurality of battery modules as described above, the battery modules located in the accommodation space.

Since the energy needed by people has strong temporality and spatiality, to rationally use energy and improve energy utilization efficiency, it is necessary to use a medium or device to store one form of energy in the same or converted into another form of energy, and then release it in a specific form of energy based on future application needs. As is well known, to achieve the grand goal of carbon neutrality, the current main way to generate green electrical energy is to develop green energy such as photovoltaics and wind power to replace fossil energy. Currently, the generation of green electrical energy generally relies on photovoltaics, wind power, hydropower, etc. However, wind energy and solar energy generally have problems of strong intermittency and large volatility, which can cause grid instability, insufficient electricity during peak hours, and too much electricity during off-peak hours. Unstable voltage can also cause damage to power. Therefore, problems such as "wind and solar curtailment" may occur due to insufficient electricity demand or limited grid acceptance capacity. To solve these problems, energy storage is essential. That is, electrical energy is converted into other forms of energy through physical or chemical means and stored, and then the energy is converted into electrical energy and released when needed. Simply put, energy storage is similar to a large "power bank", storing electrical energy when photovoltaics and wind energy are sufficient, and releasing the stored electricity when needed.

Taking electrochemical energy storage as an example, this solution provides an energy storage device. The energy storage device is provided with chemical batteries inside, mainly using chemical elements in the chemical batteries as energy storage media. The charging and discharging processes are accompanied by chemical reactions or changes of the energy storage media. Simply put, the electrical energy generated by wind and solar is stored in the chemical batteries. When external electricity usage peaks, the stored electricity is released for use, or transferred to places with electricity shortages for use.

Yet another embodiment of the present disclosure further provides a power consumption device 1 as shown in FIG. 11. The power consumption device may include the battery modules 3 in some or all of the above embodiments, or at least one energy storage device 2 in some or all of the above embodiments. It should be noted that the same or corresponding parts as those in the above embodiments can refer to the above embodiments, and will not be repeated below.

The power consumption device may further include, but is not limited to, portable devices such as Bluetooth earphones, mobile phones, digital products, tablet computers, and large devices such as electric motorcycles, electric vehicles, and energy storage power stations, which are not limited in the embodiments of the present application. The energy storage device provides electrical energy for the power consumption device.

Those of ordinary skill in the art should understand that the above embodiments are specific embodiments for implementing the present disclosure. In practical applications, various changes can be made in form and details without departing from the spirit and scope of the embodiments of the present disclosure. Any person skilled in the art can make various changes and modifications without departing from the spirit and scope of the embodiments of the present disclosure. Therefore, the protection scope of the embodiments of the present disclosure shall be defined by the claims.

## Claims

1. A battery module, comprising:
a cell assembly (100) including at least one row of cells (110);
a cells contact system (CCS) assembly (101) fixed on a top surface of the cell assembly (100), and including a plurality of series connection busbars (111), a first busbar (121), and a second busbar (131);
a first end plate (102) fixed on a first side of the cell assembly (100) in a cell arrangement direction, the first end plate (102) having a first recess (112);
a first block (103) embedded in the first recess (112) and engaged with the first busbar (121) to fix the first end plate (102) and the first busbar (121); and
a second end plate (104) fixed on a second side of the cell assembly (100) in the cell arrangement direction.

2. The battery module according to claim 1, wherein the first busbar (121) has a notch (1211), and the first block (103) includes a portion protruding from the first recess (112), and engaged with the notch (1211).

3. The battery module according to claim 1, wherein at least one of the first end plate (102) and the second end plate (104) further include a plurality of transverse reinforcement ribs (105) and a plurality of longitudinal reinforcement ribs (106), the plurality of transverse reinforcement ribs (105) and the plurality of longitudinal reinforcement ribs (106) connected to each other, wherein the first end plate (102) and the second end plate (104) are made of an insulating material.

4. The battery module according to claim 3, wherein in an extension direction of the plurality of longitudinal reinforcement ribs (106), a distribution density of the plurality of transverse reinforcement ribs (105) gradually increases from two sides toward a middle of the at least one of the first end plate (102) and the second end plate (104).

5. The battery module according to claim 3, wherein the at least one of the first end plate (102) and the second end plate (104) further includes at least one module hoisting hole (107), the at least one module hoisting hole (107) being cylindrical.

6. The battery module according to claim 5, wherein a distribution density of the plurality of longitudinal reinforcement ribs (106) connected to the at least one module hoisting hole (107) is greater than a distribution density of the plurality of longitudinal reinforcement ribs (106) on two sides of the at least one module hoisting hole (107).

7. The battery module according to claim 1, wherein the first end plate (102) further includes a plurality of first installation holes (122) arranged at intervals, and a portion of the first busbar (121) is embedded in a respective first installation hole (122) of the plurality of first installation holes (122); and/or
the second end plate (104) further includes a plurality of second installation holes (124) arranged at intervals, and a portion of the second busbar (131) is embedded in a respective second installation hole (124) of the plurality of second installation holes (124), wherein the first busbar (121) is located on the first side of the cell assembly (100) in the cell arrangement direction and the second busbar (131) is located on the second side of the cell assembly (100) in the cell arrangement direction.

8. The battery module according to claim 1, wherein the first end plate (102) further includes at least one fixed recess (119) located at a top end of the first end plate (102), and the battery module further includes at least one wire harness fixing structure (203), the at least one wire harness fixing structure (203) passing through the at least one fixed recess (119) and engaged with the first end plate (102).

9. The battery module according to claim 1, wherein the first block (103) includes a first main body portion (113) and a second main body portion (123), the first main body portion (113) and the second main body portion (123) extending along different directions, and an extension direction of the first main body portion (113) and an extension direction of the second main body portion (123) being different from a direction from the first end plate (102) toward the cell assembly (100).

10. The battery module according to claim 9, wherein the first block (103) further includes a limiting protrusion (133), the limiting protrusion (133) located on a bottom surface of the second main body portion (123), and a thickness of the limiting protrusion (133) gradually decreases in a direction toward the cell assembly (100).

11. The battery module according to claim 1, further comprising at least one binding band (200), surrounding the cell assembly (100), the first end plate (102) and the second end plate (104) to fix the cell assembly (100), the first end plate (102), and the second end plate (104).

12. The battery module according to claim 11, wherein at least one of the first end plate (102) and the second end plate (104) further includes an upper binding band protrusion (201) and a lower binding band stopper (202), the upper binding band protrusion (201) and the lower binding band stopper (202) forming an installation space, and the at least one binding band (200) engaged in the installation space.

13. The battery module according to any one of claims 1-12, wherein a plurality of cells (110) in a same row of the at least one row of cells (110) are arranged along the cell arrangement direction, and the plurality of series connection busbars (111) are configured to connect adjacent cells (110) in the same row in series.

14. An energy storage device, comprising:
a housing, the housing having an accommodation space; and
a plurality of battery modules according to any one of claims 1-13, the plurality of battery modules located in the accommodation space.

15. A power consumption device (1), comprising a plurality of battery modules any one of claims 1-13 or comprising at least one energy storage device according to claim 14.
